# EUROPÄISCHE PATENTSCHRIFT

(11) **EP 2 461 184 B1**
(45) Veröffentlichungstag und Bekanntmachung des Hinweises auf die Patenterteilung: **08.07.2015**
(21) Anmeldenummer: 10015266.9
(22) Anmeldetag: 03.12.2010
(51) Int. Cl.: G01T 1/29, G02B 26/10, G02B 27/02, G03B 42/02, H04N 1/00, H04N 1/047, H04N 1/053, G06K 15/12, G02B 26/08, H02K 33/16

(54) **Vorrichtung und Verfahren zum Auslesen von in einer Speicheleuchtstoffschicht gespeicherten Röntgeninformationen**
Device and method for reading x-ray information stored in a luminescent material layer
Dispositif et procédé destinés à l'extraction d'informations radiographiques stockées sur un disque fluorescent de mémoire

(43) Veröffentlichungstag der Anmeldung: 06.06.2012
(73) Patentinhaber: Agfa HealthCare N.V., 2640 Mortsel (BE)
(72) Erfinder: Reiser, Georg, 80337 München (DE); Mair, Stephan, 86157 Augsburg (DE)
(74) Vertreter: Linsmeier, Josef

(56) Entgegenhaltungen:
- US-A- 4 856 858
- US-A- 5 187 364
- US-A1- 2002 158 537
- US-A1- 2004 256 921
- US-A1- 2005 017 207
- US-A1- 2008 055 587

## Beschreibung

Die vorliegende Erfindung betrifft eine Vorrichtung sowie ein entsprechendes Verfahren zum Auslesen von in einer Speicherleuchtstoffschicht gespeicherten Röntgeninformationen gemäß dem Oberbegriff der unabhängigen Ansprüche.

Eine Möglichkeit zur Aufzeichnung von Röntgenbildern besteht darin, die durch ein Objekt, beispielsweise einen Patienten, hindurch tretende Röntgenstrahlung als latentes Bild in einer sogenannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Bei Vorrichtungen und Verfahren nach dem Stand der Technik wird der Stimulationslichtstrahl zumeist durch einen rotierenden Polygonspiegel abgelenkt und über die Speicherleuchtstoffschicht geführt. Um eine hohe Qualität des ausgelesenen Röntgenbildes zu gewährleisten, ist in der Regel ein Polygonspiegel von hoher optischer und mechanischer Güte erforderlich.

Aus US 2008/0055587 A1 ist bekannt, Speicherleuchtstoffplatten durch Bestrahlung mittels eines Stimulationslichtstrahls, welcher ein in Rotation oder Bewegung versetztes Ablenkelement abgelenkt wird, auszulesen.

Aus US 2004/0256921 A1 ist bekannt, die Position eines oszillierenden Spiegels zu bestimmen und daraus eine Serie von Pulsen zu berechnen, mit welchen eine Wechselwirkung einer elektromagnetischen Spule mit einem am Spiegel befindlichen Permanentmagnet gesteuert wird. In US 2002/0158537 A1 wird ein elektromagnetischer Aktuator zum Antrieb eines Spiegels beschrieben, dessen Position mittels eines Positionssensors erfasst wird.

Aus US 4,856,858 ist ein optischer Scanner vom Galvanometer-Typ bekannt, bei welchem eine mittels eines Elektromagneten auf einen Rotor ausgeübte elektromagnetische Antriebskraft abgeschaltet wird, bevor der Rotor eine Position im Bereich des Jochs des Elektromagneten einnimmt. US 5,187,364 zeigt einen optischen Scanner mit einem Positionssensor zur Erzeugung eines Signals, welches der tatsächlichen Wellenform der Oszillationsbewegung des Spiegels entspricht. Aus der tatsächlichen und einer gewünschten Wellenform wird ein Fehlersignal bestimmt, anhand dessen ein Anregungskorrektursignal erzeugt wird, durch welches der Spiegel in eine Bewegung entsprechend der gewünschten Wellenform gebracht wird.

Es ist Aufgabe der vorliegenden Erfindung, eine Vorrichtung sowie ein entsprechendes Verfahren anzugeben, durch welche bzw. welches eine möglichst hohe Qualität des erhaltenen Röntgenbildes auf möglichst einfache und kostengünstige Weise erreicht wird.

Die Aufgabe wird durch die Vorrichtung bzw. das Verfahren gemäß den unabhängigen Ansprüchen gelöst.

Die erfindungsgemäße Vorrichtung enthält eine Lichtquelle zur Erzeugung eines Stimulationslichtstrahls, welcher die Speicherleuchtstoffschicht zur Aussendung von Emissionslicht anregen kann, sowie ein Ablenkelement zum Ablenken des Stimulationslichtstrahls in der Weise, dass der abgelenkte Stimulationslichtstrahl über die Speicherleuchtstoffschicht bewegt wird, und ist gekennzeichnet durch eine Antriebseinrichtung zum Antrieb des Ablenkelements durch Abgabe von Antriebsenergie an das Ablenkelement in Abhängigkeit von einer Lage, d.h. Position und/oder Richtung, des abgelenkten Stimulationslichtstrahls und in Abhängigkeit von einer Stellung, insbesondere Winkelstellung, des Ablenkelements.

Bei dem entsprechenden Verfahren wird ein Stimulationslichtstrahl, welcher die Speicherleuchtstoffschicht zur Aussendung von Emissionslicht anregen kann, mit einem Ablenkelement abgelenkt und dabei über die Speicherleuchtstoffschicht bewegt, wobei das Ablenkelement angetrieben wird, indem eine Antriebsenergie in Abhängigkeit von einer Lage, d.h. Position und/oder Richtung, des abgelenkten Stimulationslichtstrahls und in Abhängigkeit von einer bestimmten Stellung, insbesondere Winkelstellung, des Ablenkelements an das Ablenkelement abgegeben wird.

Die Erfindung basiert auf dem Gedanken, das Ablenkelement nicht kontinuierlich anzutreiben, sondern die Abgabe von Antriebsenergie auf das Ablenkelement davon abhängig zu machen, dass sich der abgelenkte Stimulationslichtstrahl in einer bestimmten Position befindet und/oder eine bestimmte Richtung aufweist und sich das Ablenkelement in einer bestimmten Winkelstellung befindet. Die Abgabe der Antriebsenergie erfolgt hierbei vorzugsweise in Portionen, z.B. nur in bestimmten Zeiträumen.

Durch die Erfindung werden die Ablenkeigenschaften des Ablenkelements in Abhängigkeit von der aktuellen Lage des Stimulationslichtstrahls bzw. der aktuellen Winkelstellung des Ablenkelements gesteuert, so dass etwaige aktuell auftretende Veränderungen im Verhalten des Ablenkelements, z.B. thermisch bedingte Veränderungen im Ablenkverhalten, bei der Steuerung des Antriebselements automatisch berücksichtigt werden.

Der Zeitpunkt des Beginns und vorzugsweise auch der Zeitpunkt des Endes der Abgabe der Antriebsenergie an das Ablenkelement wird in erfindungsgemäßer Weise in Abhängigkeit von der mittels geeigneter Sensoren erfassten aktuellen Position bzw. Richtung des abgelenkten Stimulationslichtstrahls bestimmt. Vorzugsweise wird zusätzlich die aktuelle Stellung des Ablenkelements mittels eines Aufnehmers erfasst. Die Abgabe von Antriebsenergie wird auf diese Weise getriggert, d.h. ausgelöst, wenn sich der Stimulationslichtstrahl in einer bestimmten Position befindet bzw. in eine bestimmte Richtung zeigt, bzw. wenn sich das Ablenkelement in einer bestimmten Lage befindet. Gegenüber einem etwa durch bloße Synchronisation mit einem Systemtakt erfolgenden Antrieb wird hierdurch der besondere Vorteil erzielt, dass der jeweils günstigste Zeitpunkt für den Antrieb des Ablenkelements zur Erzielung eines möglichst konstanten Ablenkverhaltens präzise auf die aktuellen Gegebenheiten während eines Auslesevorgangs der Speicherleuchtstoffschicht abgestimmt werden kann.

Durch die Erfindung wird eine hohe Gleichmäßigkeit im Ablenkverhalten des Ablenkelements erreicht, ohne dass es auf die Verwendung von Ablenkelementen mit hoher mechanischer und optischer Güte ankommt. Somit können auch preisgünstigere Ablenkelemente mit geringerer Güte verwendet werden. Dadurch wird eine hohe Qualität des Röntgenbildes auf gleichzeitig einfache und kostengünstige Weise gewährleistet.

Erfindungsgemäß weist das Ablenkelement eine das Stimulationslicht reflektierende Fläche auf, welche durch die Antriebseinrichtung in Oszillation um eine, vorzugsweise parallel zu dieser Fläche verlaufende, Achse versetzt werden kann. Ein derart ausgestaltetes Ablenkelement lässt sich besonders einfach in erfindungsgemäßer Weise ansteuern und ist darüber hinaus besonders preisgünstig und einfach. Die vorteilhaften Wirkungen der Erfindung kommen hierbei besonders zur Geltung.

Insbesondere weist die reflektierende Fläche eine Resonanzfrequenz auf, welche durch die Antriebseinrichtung in der Weise angetrieben wird, dass die reflektierende Fläche in seiner Resonanzfrequenz oszilliert. Hierbei wird eine besonders hohe Auslenkung einerseits und Stabilität des Ablenkverhaltens andererseits erreicht.

Anstelle einer reflektierenden Fläche kann als Ablenkelement auch ein lichtbrechendes Element verwendet werden, das den vom Stimulationslichtstrahl durchstrahlt wird und diesen dabei durch Lichtbrechung abhängig von seiner jeweiligen Winkellage in unterschiedliche Richtungen ablenkt bzw. versetzt. Ein solches Element könnte z.B. ein Quader aus Glas oder Kunststoff sein, der vom Stimulationslichtstrahl durchstrahlt wird.

Die reflektierende Fläche bzw. das lichtbrechende Element ist elastisch gelagert, z.B. durch Schrauben- und/oder Torsionsfedern. Bei einer Auslenkung aus seiner Ruhestellung wird eine Rückstellkraft erzeugt, welche die Fläche bzw. das Element in Schwingung versetzt. Durch die Elastizitätseigenschaften der elastischen Lagerung in Verbindung mit der Masse der Fläche bzw. des Elements ergibt sich eine Eigenfrequenz des Systems, welcher der Resonanzfrequenz entspricht.

Ein besonderer Vorteil der Erfindung liegt darin, dass das Ablenkelement angetrieben werden kann, während dieses in seiner Resonanzfrequenz schwingt, ohne dass die Resonanzfrequenz selbst bestimmt werden muss. Darüber hinaus reagiert der erfindungsgemäße Antrieb flexibel auf etwaige, z.B. thermisch bedingte, Abweichungen von der Resonanzfrequenz, da das Antriebselement nicht zu festen Zeiten angetrieben wird, sondern beim Antrieb stets die aktuelle Lage des Strahls bzw. Stellung des Ablenkelements berücksichtigt wird. Dadurch wird die Oszillation des Ablenkelements in der Resonanzfrequenz auch bei Schwankungen in der Oszillation auf zuverlässige und einfache Weise aufrechterhalten.

Erfindungsgemäß ist die Antriebseinrichtung in der Weise ausgestaltet, dass die Abgabe von Antriebsenergie an das Ablenkelement, insbesondere nach einer vorgegebenen Zeitverzögerung, ausgelöst wird, wenn sich der Stimulationslichtstrahl in der bestimmten Position und/oder Richtung befindet. Zur Erfassung der bestimmten Position und/oder Richtung des abgelenkten Stimulationslichtstrahls ist mindestens ein Sensorelement vorgesehen. Hierdurch kann die Abgabe von Antriebsenergie besonders präzise auf die jeweils aktuell gegebenen Verhältnisse, insbesondere der vorzugsweise sensorisch erfassten aktuellen Position bzw. Richtung des abgelenkten Stimulationslichtstrahls abgestimmt werden, so dass ein besonders hohes Gleichmaß im Ablenkungs- bzw. Oszillationsverhalten des Ablenkelements erreicht wird.

Erfindungsgemäß ist ein Detektor zum Erfassen des von der Speicherleuchtstoffschicht ausgesandten Emissionslichts vorgesehen, wobei der Detektor in der Weise ausgestaltet ist oder die Vorrichtung in der Weise gesteuert wird, dass der Detektor das von der Speicherleuchtstoffschicht ausgesandte Emissionslicht erfasst, während sich der abgelenkte Stimulationslichtstrahl in einer ersten Bewegungsrichtung über die Speicherleuchtstoffschicht und sich das Ablenkelement in einer ersten Richtung bewegt, und der Detektor kein Emissionslicht erfasst, wenn sich der abgelenkte Stimulationslichtstrahl und das Ablenkelement in entgegengesetzter Bewegungsrichtung bzw. Richtung bewegt. Insbesondere ist hierbei die Lichtquelle ausgeschaltet, so dass sich sozusagen nur ein gedachter Stimulationslichtstrahl in entgegengesetzter Bewegungsrichtung über die Speicherleuchtstoffschicht bewegt.

Die Antriebseinrichtung ist in der Weise ausgestaltet, dass die Abgabe von Antriebsenergie an das Ablenkelement ausgelöst wird, wenn sich der abgelenkte Stimulationslichtstrahl in einer der ersten Bewegungsrichtung entgegengesetzten zweiten Bewegungsrichtung über die Speicherleuchtstoffschicht bewegt und sich das Ablenkelement in einer der ersten Richtung entgegengesetzten zweiten Richtung bewegt. Das heißt, dass die Abgabe von Antriebsenergie ausgelöst wird, wenn der abgelenkte Stimulationslichtstrahl während der Bewegung in der zweiten Bewegungsrichtung mindestens eines der beiden Sensorelemente überstreicht und sich dementsprechend in einer bestimmten Position und/oder Richtung befindet. Entsprechendes gilt für die Lage bzw. Bewegung des Ablenkelements. Auf diese Weise erfolgt ein Antrieb des Ablenkelements während des Rücklaufs des abgelenkten Stimulationslichtstrahls, auch Retrace genannt. Hierdurch wird der Vorteil erzielt, dass die durch einen Antriebspuls ggf. vorübergehend auftretenden Unregelmäßigkeiten in der Oszillation des Ablenkelements bereits wieder abgeklungen sind, wenn sich der abgelenkte Stimulationslichtstrahl bei der nachfolgenden Bewegung in der ersten Bewegungsrichtung über die Speicherleuchtstoffschicht bewegt. Hierdurch wird auf einfache Weise eine besonders hohe Gleichmäßigkeit im Ablenk- bzw. Oszillationsverhalten erzielt.

Die Antriebseinrichtung ist in der Weise ausgestaltet, dass keine Abgabe von Antriebsenergie an das Ablenkelement erfolgt, wenn sich der Stimulationslichtstrahl in der ersten Bewegungsrichtung über die Speicherleuchtstoffschicht bewegt. Neben dem obenstehend geschilderten Vorteil wird hierbei die positive Wirkung erzielt, dass etwaige elektromagnetische Störungen aufgrund eines Antriebspulses das nachfolgende Erfassen des Emissionslichts nicht störend beeinflussen können. Dadurch wird eine besonders hohe Qualität des ausgelesenen Röntgenbildes erhalten.

Aufgrund der nicht unmittelbar vorher angeregten, freien Bewegung, insbesondere Oszillation, des Ablenkelements während der Bewegung in der ersten Bewegungsrichtung des abgelenkten Stimulationslichtstrahls kann das Scannen der Speicherleuchtstoffschicht auch als ballistisches Scannen bezeichnet werden.

Bei einer bevorzugten Ausgestaltung weist das Ablenkelement ein magnetisches, insbesondere ferromagnetisches und/oder permanentmagnetisches, Element auf. Die Antriebseinrichtung weist eine elektromagnetische Einheit, insbesondere einen Elektromagneten, auf, welche mit dem magnetischen Element wechselwirken und dabei Antriebsenergie an das Ablenkelement abgeben kann. Hierdurch wird auf einfache Weise eine präzise steuerbare Abgabe von Antriebsenergie realisiert.

Erfindungsgemäß ist die Antriebseinrichtung zur Abgabe der Antriebsenergie in Form von Pulsen ausgebildet. Die Dauer und/oder Höhe der Pulse sind durch eine Pulsweiten- bzw. Pulshöhenmodulation hierbei vorzugsweise so gewählt, dass die Amplitude der Auslenkung des oszillierenden Ablenkelements konstant ist. Insbesondere weisen die Pulse eine Pulsdauer auf, welche kürzer ist als die halbe Periodendauer, mit welcher das Ablenkelement, insbesondere die reflektierende Fläche, oszilliert. Hierdurch wird erreicht, dass der Zeitraum der Abgabe von Antriebsenergie auf einen Zyklus der Oszillationsbewegung des Ablenkelements begrenzt werden kann, in welchem sich dieses in eine Richtung bewegt. Wird die Pulsdauer bei der Abgabe der Antriebsenergie ausreichend klein gewählt, so ist auch für den Fall, dass das Ablenkelement vorübergehend höherfrequentere Oszillationen mit kürzeren Periodendauern ausführt, ein zuverlässiger Antrieb des Ablenkelements gewährleistet.

In einer weiteren bevorzugten Ausgestaltung weist die Vorrichtung eine Transporteinrichtung auf, durch welche die Speicherleuchtstoffschicht in eine gekrümmte Form gebracht werden kann. Die Krümmung der Speicherleuchtstoffschicht erfolgt hierbei vorzugsweise zylindrisch-konkav, so dass der durch das Ablenkelement abgelenkte Stimulationslichtstrahl bei seinem Weg über die Speicherleuchtstoffschicht stets senkrecht auf die Speicherleuchtstoffschicht auftrifft. Dadurch kann die beim Auslesen ebener Speicherleuchtstoffschichten üblicherweise erforderliche Postscan-Optik bzw. rechnerische Eliminierung von Verzerrungen im ausgelesenen Röntgenbild entfallen. Der Aufbau der Vorrichtung bzw. das Verfahren wird dadurch noch einfacher, ohne dass die Bildqualität negativ beeinträchtigt wird.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine schematische Darstellung eines Beispiels einer Vorrichtung zum Auslesen von Speicherleuchtstoffschichten;
- Fig. 2: ein erstes Beispiel für eine Verwendung des Ablenkelements in Seitenansicht;
- Fig. 3: ein erstes Beispiel für ein Ablenkelement in Draufsicht;
- Fig. 4: ein zweites Beispiel für ein Ablenkelement in Draufsicht;
- Fig. 5: ein Beispiel für einen zeitlichen Ablauf der Steuerung der Vorrichtung;
- Fig. 6: ein Beispiel zur Erläuterung eines bevorzugten Aspekts der Steuerung der Vorrichtung; und
- Fig. 7: ein zweites Beispiel für eine Verwendung des Ablenkelements in Seitenansicht.

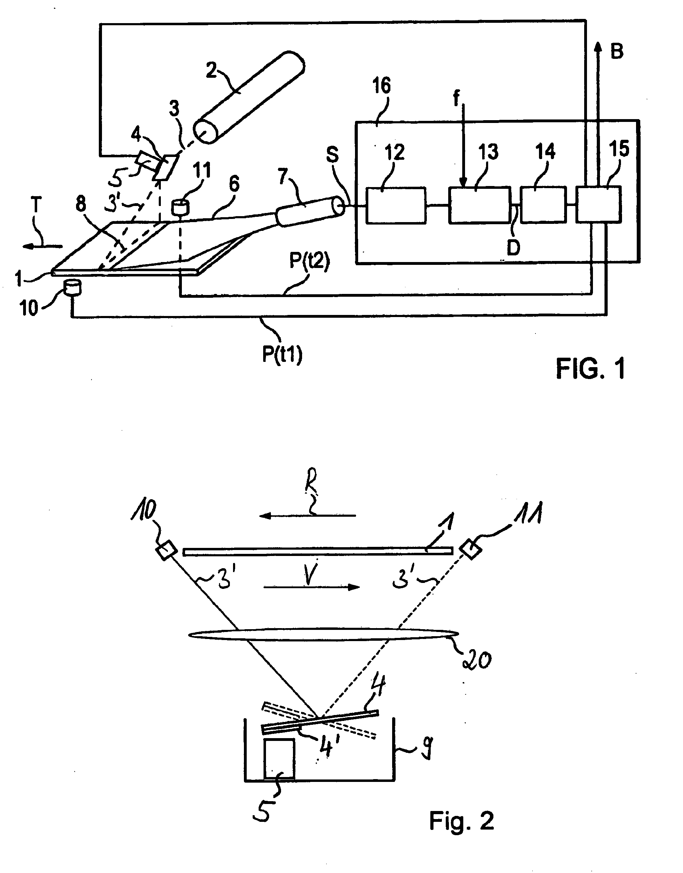

Figur 1 zeigt eine Vorrichtung zum Auslesen einer Speicherleuchtstoffschicht 1. Durch einen Laser 2 wird ein Stimulationslichtstrahl 3 erzeugt, welcher durch ein Ablenkelement 4 derart abgelenkt wird, dass sich dieser entlang einer Zeile 8 über die auszulesende Speicherleuchtstoffschicht 1 bewegt. Das Ablenkelement 4 weist eine reflektierende Fläche, insbesondere in Form eines Spiegels, auf, welche durch eine Antriebseinrichtung 5 in Oszillation versetzt wird.

Während der Bewegung des abgelenkten Stimulationslichtstrahls 3' über die Speicherleuchtstoffschicht 1 sendet diese in Abhängigkeit der darin gespeicherten Röntgeninformation Emissionslicht aus, welches von einer optischen Sammeleinrichtung 6, beispielsweise einem Lichtleiterbündel oder einer geeigneten Spiegeleinrichtung, gesammelt und von einem optischen Detektor 7, vorzugsweise einem Photomultiplier (PMT), erfasst und dabei in ein entsprechendes Detektorsignal S umgewandelt wird.

Das Detektorsignal S wird einer Verarbeitungseinrichtung 16 zugeführt, in welcher Bildsignalwerte B für einzelne Bildpunkte des ausgelesenen Röntgenbildes abgeleitet werden. Soll die ausgelesene Zeile 8 beispielsweise aus 1000 Bildpunkten zusammengesetzt sein, so werden aus dem beim Auslesen der Zeile 8 erhaltenen Detektorsignal S 1000 entsprechende Bildsignalwerte B abgeleitet.

Durch einen Transport der Speicherleuchtstoffschicht 1 in Transportrichtung T mittels einer Transporteinrichtung (nicht dargestellt) wird ein sukzessives Auslesen einzelner Zeilen 8 der Speicherleuchtstoffschicht 1 erreicht und damit ein zweidimensionales, aus einzelnen Bildpunkten mit jeweils einem zugehörigen Bildsignalwert B zusammengesetztes Röntgenbild erhalten. Beträgt die Anzahl der in Transportrichtung T ausgelesenen Zeilen 8 beispielsweise 1500, so werden mit jeweils 1000 Bildpunkten pro Zeile 8 für das ausgelesene Röntgenbild insgesamt 1500 mal 1000 Bildpunkte mit jeweils einem zugehörigen Bildsignalwert B erhalten.

Grundsätzlich ist es auch möglich, die Speicherleuchtstoffschicht 1 ortsfest zu lagern und die restlichen Komponenten, insbesondere Laser 2, Ablenkelement 4, Sammeleinrichtung 6 und Detektor 7, relativ zur Speicherleuchtstoffschicht 1 zu bewegen.

Das Detektorsignal S wird zunächst durch ein Tiefpassfilter 12 gefiltert, wobei höherfrequente Anteile des Detektorsignals S, insbesondere Rauschanteile, eliminiert werden. Das gefilterte Detektorsignal S wird dann einem Analog-Digital-Wandler 13 zugeführt und dort mit einer Abtastfrequenz f abgetastet, wobei bei jedem Abtastvorgang ein Detektorsignal D in jeweils digitalen Einheiten erhalten wird. Das Abtasten des Detektorsignals S im Analog-Digital-Wandler 13 erfolgt vorzugsweise nach dem sogenannten Sample-and-Hold-Prinzip, wonach beim Abtasten die jeweils aktuelle analoge Signalhöhe des zu einem Abtastzeitpunkt am Analog-Digital-Wandler 13 anliegenden Detektorsignals S gehalten und in einem entsprechenden digitalen Detektorsignalwert D umgewandelt wird. Nach einer Zwischenspeicherung im Speicher 14 werden in einer Steuerungseinheit 15 aus den Detektorsignalwerten D die Bindsignalwerte B berechnet.

Die gezeigte Vorrichtung weist ferner zwei Sensoren 10 und 11 auf, die zu beiden Seiten der Speicherleuchtstoffschicht 1 in der Weise angeordnet sind, dass auf diese der abgelenkte Stimulationslichtstrahl 3' auftreffen kann, bevor bzw. nachdem dieser die Speicherleuchtstoffschicht 1 entlang der Zeile 8 überstreicht bzw. überstrichen hat. Wird der Stimulationslichtstrahl 3 mit dem Ablenkelement 4 in Richtung der Zeile 8 abgelenkt, so passiert dieser vor dem eigentlichen Abtasten der Zeile 8 zunächst den ersten Sensor 10 und danach den zweiten Sensor 11. Das Licht des abgelenkten Stimulationslichtstrahls 3' wird dabei von den beiden lichtempfindlichen Sensoren 10 und 11 erfasst und in entsprechende elektrische Signale P(t1) und P(t2) zu den Zeitpunkten t1 bzw. t2 umgewandelt und an die Steuerungseinheit 15 der Verarbeitungseinrichtung 16 weitergeleitet.

Die Steuerungseinheit 15 ist mit der Antriebseinrichtung 5 zum Antrieb des Ablenkelements 4 verbunden und steuert dieses in der Weise, dass das Ablenkelement 4 durch Abgabe von Abtriebsenergie von der Antriebseinrichtung 5 nur dann aktiv angetrieben wird, wenn oder nachdem der abgelenkte Stimulationslichtstrahl 3' eine bestimmte Richtung und/oder Position eingenommen hat. Im gezeigten Beispiel überstreicht der abgelenkte Stimulationslichtstrahl 3' zumindest einen der beiden Sensoren 10 und 11, woraufhin dieser einen elektrischen Puls P an die Steuerungseinheit 15 sendet, welcher - ggf. nach einer vorgebbaren Zeitverzögerung - die Antriebseinrichtung 5 in der Weise steuert, dass diese zeitweise Antriebsenergie, insbesondere in Form eines Antriebsenergiepulses, an das oszillierende Ablenkelement 4 abgibt und dabei dessen Oszillation, vorzugsweise im Bereich einer Resonanzfrequenz des Ablenkelements 4, aufrechterhält. Dies wird im Folgenden näher erläutert.

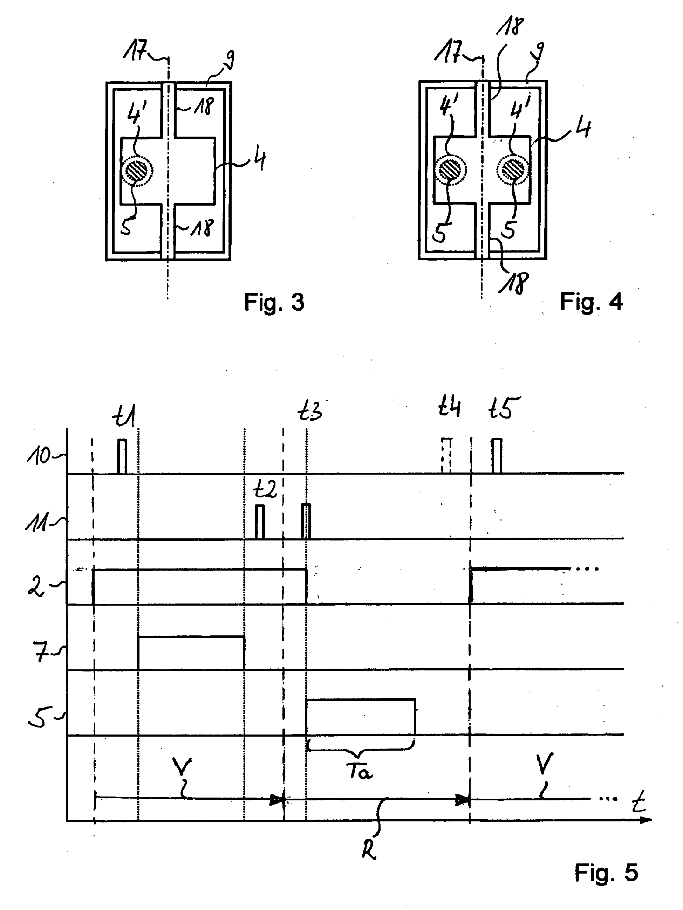

Figur 2 zeigt ein erstes Beispiel für eine Verwendung eines Ablenkelements 4 in einer Seitenansicht. Das entsprechende Ablenkelement in Draufsicht zeigt Figur 3.

Das Ablenkelement 4 weist eine reflektierende Fläche auf, welche über streifenförmige Verlängerungen 18 an einem Gehäuse 9 angebracht ist. Die streifenförmigen Verlängerungen 18 sind vorzugsweise einstückig mit der reflektierenden Fläche des Ablenkelements 4 ausgebildet, können aber auch separat von dieser hergestellt und anschließend mit dieser verbunden werden. Die streifenförmigen Verlängerungen 18 stellen eine Torsionsfeder dar, durch welche bei einer Auslenkung des Ablenkelements 4 um eine entlang der Verlängerungen 18 verlaufende Achse 17 eine Rückstellkraft erzeugt wird, die das Ablenkelement 4 in die entgegengesetzte Richtung auslenkt usw.. Auf diese Weise wird das Ablenkelement 4 zu einer Oszillation um die Achse 17 angeregt.

Die Auslenkung des Ablenkelements 4 erfolgt vorzugsweise durch einen Elektromagneten 5, welcher durch Anlegen einer elektrischen Spannung und den damit einhergehenden Stromfluss ein magnetisches Feld erzeugt, das auf ein am Ablenkelement 4 befindliches magnetisches Element 4' wirkt. Je nach Material des magnetischen Elements 4' kann dieses durch den Elektromagneten 5 sowohl angezogen als auch abgestoßen werden oder nur angezogen werden. Ersteres ist der Fall, wenn das magnetische Element permanentmagnetische Substanzen aufweist. Letzteres ist der Fall bei Verwendung eines ferromagnetischen Materials, dessen Magnetisierung nicht permanent erhalten bleibt.

Um das Ablenkelement 4 von seiner Ruheposition zunächst in einen oszillierenden Zustand zu bringen, werden an den Elektromagneten 5 fortlaufend Spannungspulse einer bestimmten Dauer und Frequenz angelegt, wodurch schließlich die Amplitude der Oszillation des Ablenkelements 4 so groß wird, dass der abgelenkte Stimulationslichtstrahl 3' über die Breite der abzutastenden Speicherleuchtstoffschicht 1 hinaus läuft und dabei insbesondere auch auf den ersten bzw. zweiten Sensor 10 bzw. 11 trifft.

Zwischen dem Ablenkelement 4 und der Speicherleuchtstoffschicht 1 ist im gezeigten Beispiel eine optische Einrichtung 20, eine sog. Postscan-Optik, vorgesehen, durch welche der abgelenkte Stimulationslichtstrahl 3' einerseits auf die Speicherleuchtstoffschicht 1 fokussiert wird und andererseits dessen Radialbewegung in eine Linearbewegung entlang der Zeile 8 auf der Speicherleuchtstoffschicht 1 umgewandelt wird.

Alternativ oder zusätzlich zu einer Postscan-Optik kann auch ein sog. Variofokus verwendet werden, welcher zwischen dem Laser 2 und dem Ablenkelement 4 angeordnet ist (sog. Prescan-Optik) und den Laserstrahl 3 so formt, dass nach seiner Ablenkung durch das Ablenkelement 4 ebenfalls eine Linearbewegung entlang der Linie 8 auf der Speicherleuchtstoffschicht 1 erhalten wird. Eine Postscan-Optik kann dann entfallen.

Grundsätzlich ist es aber auch ohne Weiteres möglich, auf die optische Einrichtung 20 vollständig zu verzichten und die dann auftretenden Verzerrungen aus dem erhaltenen Röntgenbild herauszurechnen, beispielsweise anhand von vor dem Auslesen ermittelten Informationen zum Verhalten des Stimulationslichtstrahls

Figur 4 zeigt eine Draufsicht auf ein zweites Beispiel eines Ablenkelements 4, welches im Unterschied zu dem in Figur 3 gezeigten Beispiel nicht nur mittels eines Elektromagneten 5, sondern mittels zwei Elektromagneten 5 und den entsprechenden magnetischen Elementen 4' an der Unterseite des Ablenkelements 4 zu Oszillationen um die Achse 17 angeregt werden kann. Bei dieser Variante werden die beiden Elektromagneten 5 vorzugsweise so angesteuert, dass ein Elektromagnet 5 das entsprechende magnetische Element 4' auf einer Seite des Ablenkelements 4 abstößt und der andere Elektromagnet 5 das entsprechende magnetische Element 4' auf der anderen Seite des Ablenkelements 4 anzieht. Auf diese Weise wird die Abgabe eines besonders hohen Maßes an Antriebsenergie zum gewünschten Zeitpunkt ermöglicht. Im Übrigen gelten für dieses Beispiel die Ausführungen im Zusammenhang mit den Figuren 2 und 3 entsprechend.

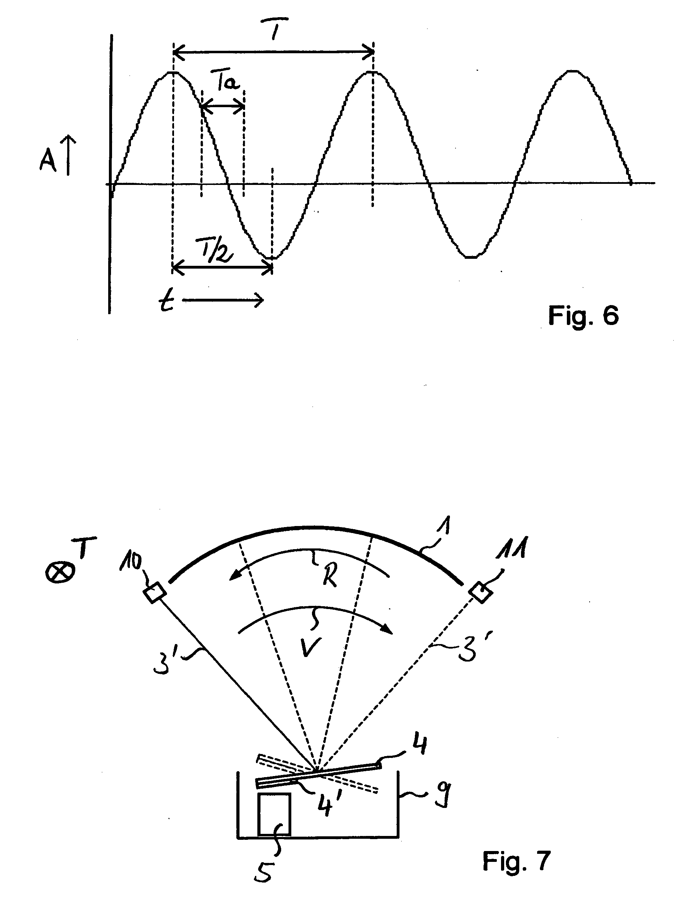

Nachfolgend wird anhand der Figuren 5 und 6 der zeitliche Ablauf der Steuerung der Vorrichtung einschließlich des Ablenkelements 4 näher erläutert, wobei Bezug auf die Figuren 1 und 2 genommen wird.

In der gewählten Darstellung der Figur 5 ist der zeitliche Verlauf von Signalen bzw. Zuständen der einzelnen Komponenten der Vorrichtung (siehe Fig. 1) dargestellt, und zwar des ersten Sensors 10, des zweiten Sensors 11, des Lasers 2, des Detektors 7 sowie des Elektromagneten 5 am Ablenkelement 4. Der dargestellte Verlauf des jeweiligen Zustands des Lasers 2, des Detektor 7 bzw. des Elektromagneten 5 ist hierbei so zu interpretieren, dass der Laser 2, Detektor 7 bzw. Elektromagnet 5 aktiv ist und Stimulationslicht erzeugt, Emissionslicht erfasst bzw. Antriebsenergie abgibt, wenn ein von der Nulllinie verschiedener Verlauf gezeigt wird.

Wenn der Stimulationslichtstrahl 3 durch das oszillierende Ablenkelement 4 abgelenkt wird, überstreicht der sich in Richtung V (sog. Trace-Phase) bewegende, abgelenkte Stimulationslichtstrahl 3'zunächst zum Zeitpunkt t1 den Sensor 10, worauf dieser ein entsprechendes Sensorsignal P(t1) an die Steuerungseinheit 15 sendet. Dieses Sensorsignal wird auch als Begin of Line-Signal (BOL) bezeichnet.

Nach einer vorgebbaren Zeitspanne, nach welcher der abgelenkte Stimulationslichtstrahl 3' die Speicherleuchtstoffschicht 1 erreicht hat, erfolgt die Detektion des durch den abgelenkten Stimulationslichtstrahl 3' angeregten Emissionslichts durch den Detektor 7. Nach Durchlaufen der Zeile 8 der Speicherleuchtstoffschicht 1 verlässt der Stimulationslichtstrahl 3' schließlich die Speicherleuchtstoffschicht 1 und überstreicht zum Zeitpunkt t2 den zweiten Sensor 11, woraufhin dieser ebenfalls ein entsprechendes Sensorsignal P(t2) erzeugt. Dieses Sensorsignal wird auch als End of Line-Signal (EOL) bezeichnet.

Aufgrund der Oszillationsbewegung des Ablenkelements 4 vollzieht dieses nach seinem maximalen Ausschlag nun eine Rückwärtsbewegung, bei welcher der sich nunmehr in Rückwärtsrichtung R (sog. Retrace-Phase) bewegende, abgelenkte Stimulationslichtstrahl 3' erneut zu einem Zeitpunkt t3 den zweiten Sensor 11 überstreicht, woraufhin dieser wiederum ein entsprechendes Sensorsignal an die Steuerungseinheit 15 sendet. Diese schaltet sodann den Laser 2 ab und veranlasst den Elektromagneten 5 zur Erzeugung eines magnetischen Feldes, wodurch an das oszillierende Ablenkelement 4 Antriebsenergie übertragen wird.

Die Übertragung der Antriebsenergie erfolgt hierbei nur während einer bestimmten Zeitdauer Ta und während des Rücklaufs des Ablenkelements 4 bzw. während des gedachten Rücklaufs des abgelenkten (abgeschalteten) Stimulationslichtstrahls 3' in Richtung R. Die Zeitdauer Ta der Anregung des Ablenkelements 4 ist hierbei vorzugsweise kürzer als die Hälfte der Periodendauer T einer vollständigen Oszillationsbewegung, d.h. einer ganzen Hin- und Herbewegung, des Ablenkelements 4.

Dies ist in Figur 6 veranschaulicht, welche den Verlauf der Amplitude A des oszillierenden Ablenkelements, d.h. dessen Auslenkung, über die Zeit t zeigt.

T bezeichnet die Periodendauer einer vollständigen Oszillation des Ablenkelements 4. Die bevorzugte Zeitdauer Ta der Abgabe von Antriebsenergie an das Ablenkelement 4 ist, wie in Figur 6 ersichtlich, kürzer als die halbe Periodendauer T/2 der Oszillation und beginnt erst zu einem Zeitpunkt zu laufen, wenn die maximale Auslenkung des Ablenkelements 4 bereits überschritten ist. Der Zeitpunkt dieser maximalen Auslenkung liegt genau in der Mitte zwischen den beiden in Figur 5 eingezeichneten Zeitpunkten t2 und t3.

Durch die beschriebene Wahl der Zeitdauer Ta und des Zeitraums, d.h. der zeitlichen Lage der Zeitdauer Ta, für die Anregung des Ablenkelements 4 wird erreicht, dass an das Ablenkelement 4 stets nur während der Bewegung in einer Bewegungsrichtung Antriebsenergie zugeführt wird, und zwar auch dann, wenn sich die Frequenz der Oszillation des Ablenkelements 4 vorübergehend etwas ändert, insbesondere etwas größer wird, was eine vorübergehende Verkürzung der aktuellen Periodendauer T zur Folge hat.

Auf seinem gedachten Weg in der Retrace-Phase in Richtung R über die Speicherleuchtstoffschicht 1 verlässt der (abgeschaltete) Stimulationslichtstrahl 3' die Speicherleuchtstoffschicht 1 und erreicht zum Zeitpunkt t4 den ersten Sensor 11, dessen gedachtes Sensorsignal zum Zeitpunkt t4 in Fig. 6 eingezeichnet ist. Nach einer Richtungsumkehr des schwingenden Ablenkelements 4 wird der Laser 2 wieder eingeschaltet und der abgelenkte Stimulationslichtstrahl 3' überstreicht zu einem Zeitpunkt t5 wieder den ersten Sensor 10, welcher ein entsprechendes Begin of Line-Signal (BOL) erzeugt. Der oben beschriebene Ablauf beginnt nun von Neuen, wobei eine nächste Zeile 8 der Speicherleuchtstoffschicht 1 ausgelesen wird.

Wie bereits erwähnt, ist es alternativ oder zusätzlich zur Erfassung der Lage, d.h. Position bzw. Richtung, des abgelenkten Stimulationslichtstrahls 3' mittels der Sensoren auch möglich, einen Aufnehmer, vorzugsweise in Form einer Spule, vorzusehen, welcher die aktuelle Stellung des Ablenkelements 4 erfassen kann. Der Aufnehmer liefert ein entsprechendes Aufnehmersignal, wenn das oszillierende Ablenkelement 4 seine Stellung ändert. Beispielsweise kann einer der beiden Elektromagneten 5 in dem in Fig. 4 gezeigten Beispiel zur Abgabe von Antriebsenergie ausgebildet sein, während der zweite Elektromagnet 5 die Funktion des Aufnehmers übernimmt, wobei das entsprechende magnetische Element 4' dieses Elektromagneten 5 permanentmagnetisch ausgebildet ist. Eine Relativbewegung zwischen dem Element 4' und der Spule des Elektromagneten 5 während der Oszillation des Ablenkelements 4 induziert dann in der Spule eine Spannung, die als Aufnehmersignal ausgewertet werden kann, wobei insbesondere z.B. das Durchlaufen eines Umkehrpunktes erfasst werden kann. In Abhängigkeit von dem entsprechenden Aufnehmersignal kann dann die Abgabe von Antriebsenergie an das Ablenkelement gesteuert, insbesondere getriggert, werden.

Die Erfindung wurde vorstehend anhand einer Reihe von konkreten, bevorzugten Beispielen beschrieben. Weitere vorteilhafte Varianten oder Alternativen werden nachfolgend näher erläutert.

Alternativ kann die Abgabe von Antriebsenergie auch in der Trace-Phase erfolgen. Alternativ kann eine Abgabe der Antriebsenergie an das Ablenkelement 4 sowohl in der Trace- als auch in der Retrace-Phase erfolgen. Hierbei ist dann zwar kein sog. ballistisches Scannen während der Detektion des Emissionslichts mehr gegeben, und es kann auch ein Übersprechen des Antriebspulses auf die Elektronik bei der Datenaufnahme nicht ausgeschlossen werden. Dennoch wird hierbei der Vorteil erzielt, dass aufgrund der jeweils geringeren Antriebsenergiemengen pro Zeiteinheit jeweils kürzere Antriebspulse gewählt werden können, was einen zuverlässigen Antrieb des Ablenkelements auch bei höherfrequenteren Oszillationen gewährleistet, wie bereits oben erläutert wurde.

Die Form der Antriebspulse bei der Abgabe der Antriebsenergie kann die Form eines Rechtecks aufweisen, wie in Fig. 5 mit Bezug auf den Elektromagneten 5 dargestellt. Alternativ kann die Form der Antriebspulse aber auch eine von der Rechteckform abweichende, insbesondere eine beliebige, Form aufweisen. Auf diese Weise kann z.B. das Auftreten elektromagnetischer Störsignale stark vermindert oder sogar verhindert werden, was die elektromagnetische Verträglichkeit (EMV) der Vorrichtung deutlich verbessert.

Der Antriebspuls kann auch eine Pulsdauer Ta aufweisen, die länger ist als eine halbe Periode T/2 der Oszillation. Ein damit verbundener "Bremseffekt" auf das Ablenkelement 4 kann unter bestimmten Voraussetzungen erwünscht und entsprechend von Vorteil sein.

Darüber hinaus kann die Polarität des Antriebspulses wechseln, wobei der Polaritätswechsel vorzugsweise, aber nicht notwendigerweise, an einem Umkehrpunkt der Oszillation ausgeführt wird. Auch hierdurch kann ein effektives Antreiben der Schwingung realisiert werden.

Grundsätzlich ist es möglich, nicht in jeder Oszillationsperiode des Ablenkelements 4 Antriebsenergie an das Ablenkelement 4 abzugeben, sondern nur in jeder zweiten, dritten oder höheren Periode. Es kann die Abgabe der Antriebsenergie auch erst bei Bedarf erfolgen, wenn z.B. die Amplitude der Auslenkung des Ablenkelements 4, welche mit dem Aufnehmer zuverlässig erfasst werden kann, einen bestimmten Wert unterschritten hat. Alternativ oder zusätzlich kann eine Abgabe von Antriebsenergie an das Ablenkelement z.B. erst erfolgen, sobald kein EOL- und/oder BOL-Signal mehr von den Sensoren 10 bzw. 11 erzeugt wird.

Die oben beschriebene Steuerung der Antriebseinrichtung 5 muss nicht notwendigerweise in Abhängigkeit von den erfassten sog. BOL- bzw. EOL-Signalen erfolgen. Anstelle von im Wesentlichen in der Ebene bzw. im Krümmungsverlauf der Speicherleuchtstoffschicht 1 (siehe Figuren 2 und 7) angeordneten BOL- bzw. EOL-Sensoren 10 bzw. 11 können auch eigene Photodioden oder andere positions- und zeitsensitive Sensoren vorgesehen sein, die nicht notwendigerweise in der Ebene bzw. im Krümmungsverlauf der Speicherleuchtstoffschicht 1 liegen müssen.

Insbesondere für einen mit dem Antrieb verbundenen Hochlaufalgorithmus zum Anregen der Oszillation des Ablenkelements 4 aus seiner Ruhelage kann ein Sensor (nicht dargestellt) in der Nähe der Ruhelageposition des Ablenkelements 4 von Vorteil sein, der jedoch, vom Ablenkelement 4 aus betrachtet, hinter der Ebene der Speicherleuchtstoffschicht 1 liegt, so das er nur vor dem Einfahren der Speicherleuchtstoffschicht 1 zur Erfassung des abgelenkten Stimulationslichtstrahls 3' dient, während er beim eigentlichen Auslesen bei eingefahrener Speicherleuchtstoffschicht 1 von dieser verdeckt wird.

Figur 7 zeigt ein zweites Beispiel für eine Verwendung des Ablenkelements 4 in einer Seitenansicht. Im Unterschied zu dem in Figur 2 gezeigten Beispiel ist die Speicherleuchtstoffschicht 1 jedoch nicht eben, sondern gekrümmt. Der Verlauf der Krümmung der Speicherleuchtstoffschicht 1 entspricht im Wesentlichen dem Krümmungsverlauf eines Teils einer Zylindermantelfläche, deren Achse parallel zu der senkrecht zur Zeichenebene verlaufenden Transportrichtung T (vgl. Fig. 1) ausgerichtet ist. Eine solche Krümmung hat gegenüber dem Auslesen einer ebenen Speicherleuchtstoffschicht 1 (siehe Figur 2) den Vorteil, dass auf spezielle optische Einrichtungen (vgl. Postscan-Optik 20 in Fig. 2) zwischen dem Ablenkelement 4 und der Speicherleuchtstoffschicht 1 verzichtet werden kann, was den Aufbau der Vorrichtung vereinfacht. Gleichzeitig wird auf diese Weise gewährleistet, dass der abgelenkte Stimulationslichtstrahl 3' stets im Wesentlichen senkrecht auf den jeweiligen Abschnitt der Speicherleuchtstoffschicht 1 auftrifft, was zu einer besonders hohen Lichtausbeute bei der Anregung des Emissionslichts bei gleichzeitiger Vermeidung von negativen Effekten auf die Bildqualität aufgrund von Stimulationslichtstreuung in der Speicherleuchtstoffschicht 1 führt. Im Übrigen gelten die Ausführungen zu Figur 2 entsprechend.

Die Erfindung wurde obenstehend im Zusammenhang mit dem Auslesen von Speicherleuchtstoffschichten näher erläutert. Eine Vielzahl der dabei erreichten Vorteile lassen sich aber auch beim Abtasten oder Beschriften von anderen Medien, wie z.B. Dokumenten bzw. beliebigen Objekten, erreichen.

## Patentansprüche

1. Vorrichtung zum Auslesen von in einer Speicherleuchtstoffschicht (1) gespeicherten Röntgeninformationen mit
- einer Lichtquelle (2) zur Erzeugung eines Stimulationslichtstrahls (3), welcher die Speicherleuchtstoffschicht (1) zur Aussendung von Emissionslicht anregen kann,
- einem Ablenkelement (4) zum Ablenken des Stimulationslichtstrahls (3) in der Weise, dass der abgelenkte Stimulationslichtstrahl (3') über die Speicherleuchtstoffschicht (1) bewegt wird,
- einer Antriebseinrichtung (5) zum Antrieb des Ablenkelements (4), wobei das Ablenkelement (4) eine reflektierende Fläche aufweist, welche durch die Antriebseinrichtung (5) in Oszillation versetzt wird, und
- einem Detektor (7) zum Erfassen von von der Speicherleuchtstoffschicht (1) ausgesandtem Emissionslicht während sich der abgelenkte Stimulationslichtstrahl (3') in einer ersten Bewegungsrichtung (V) über die Speicherleuchtstoffschicht (1) und sich das Ablenkelement (4) in einer ersten Richtung bewegt,
**dadurch gekennzeichnet, dass**
der Detektor (7) in der Weise ausgestaltet oder die Vorrichtung in der Weise gesteuert wird, dass der Detektor (7) kein Emissionslicht erfasst, wenn sich der abgelenkte Stimulationslichtstrahl (3') in einer der ersten Bewegungsrichtung (V) entgegengesetzten zweiten Bewegungsrichtung (R) und sich das Ablenkelement (4) in einer der ersten Richtung entgegengesetzten zweiten Richtung bewegt,
mindestens ein Sensorelement (10, 11) zur Erfassung der Lage des abgelenkten Stimulationslichtstrahls (3') vorhanden ist und
eine Steuerungseinheit (15) vorhanden ist zur Steuerung der Antriebseinrichtung (5) in der Weise, dass
- Antriebsenergie in Form von Pulsen an das Ablenkelement (4) in Abhängigkeit von der erfassten Lage des abgelenkten Stimulationslichtstrahls (3') abgegeben wird, wobei die Abgabe von Antriebsenergie an das Ablenkelement (4) ausgelöst wird, wenn sich der abgelenkte Stimulationslichtstrahl (3') in der zweiten Bewegungsrichtung (R) bewegt, und
- die Abgabe von Antriebsenergie an das Ablenkelement (4) nur dann erfolgt, wenn sich der abgelenkte Stimulationslichtstrahl (3') in der zweiten Bewegungsrichtung (R) bewegt und sich das Ablenkelement (4) in der zweiten Richtung bewegt.

2. Vorrichtung nach Anspruch 1, wobei die Antriebseinrichtung (5) in der Weise ausgestaltet ist, dass die Abgabe von Antriebsenergie an das Ablenkelement (4) nach einer vorgegebenen Zeitverzögerung nach Überstreichen des mindestens einen Sensorelements (11) durch den abgelenkten Stimulationslichtstrahl (3') ausgelöst wird.

3. Vorrichtung nach einem der vorangehenden Ansprüche mit mindestens einem Aufnehmer zur Erfassung der Stellung des Ablenkelements (4).

4. Vorrichtung nach einem der vorangehenden Ansprüche, wobei das Ablenkelement (4) ein magnetisches Element (4') und die Antriebseinrichtung (5) eine elektromagnetische Einheit aufweist, welche mit dem magnetischen Element (4') wechselwirken und dabei Antriebsenergie an das Ablenkelement (4) abgeben kann.

5. Vorrichtung nach einem der vorangehenden Ansprüche, wobei die reflektierende Fläche des Ablenkelements (4) durch die Antriebseinrichtung (5) zu einer Oszillation um eine, vorzugsweise parallel zur Spiegelfläche verlaufende, Achse (17) angeregt werden kann.

6. Vorrichtung nach Anspruch 5, wobei die reflektierende Fläche eine Resonanzfrequenz aufweist, und die Antriebseinrichtung (5) in der Weise zum Antrieb der reflektierenden Fläche ausgebildet ist, dass die reflektierende Fläche in seiner Resonanzfrequenz oszilliert.

7. Vorrichtung nach einem der vorangehenden Ansprüche, wobei das Ablenkelement (4) mit einer Periodendauer (T) oszilliert und die Pulse eine Pulsdauer (Ta) aufweisen, welche kürzer ist als die halbe Periodendauer (T/2).

8. Vorrichtung nach einem der vorangehenden Ansprüche mit einer Transporteinrichtung, durch welche die Speicherleuchtstoffschicht (1) zumindest während des Auslesens in eine gekrümmte Form gebracht werden kann.

9. Verfahren zum Auslesen von in einer Speicherleuchtstoffschicht (1) gespeicherten Röntgeninformationen, wobei
- ein Stimulationslichtstrahl (3), welcher die Speicherleuchtstoffschicht (1) zur Aussendung von Emissionslicht anregen kann, mit einem Ablenkelement (4) abgelenkt und dabei über die Speicherleuchtstoffschicht (1) bewegt wird,
- das Ablenkelement (4) eine reflektierende Fläche aufweist, welche durch eine Antriebseinrichtung (5) in Oszillation versetzt wird, und
- von der Speicherleuchtstoffschicht (1) ausgesandtes Emissionslicht erfasst wird, während sich der abgelenkte Stimulationslichtstrahl (3') in einer ersten Bewegungsrichtung (V) über die Speicherleuchtstoffschicht (1) und sich das Ablenkelement (4) in einer ersten Richtung bewegt,
**dadurch gekennzeichnet, dass**
- kein Emissionslicht erfasst wird, wenn sich der abgelenkte Stimulationslichtstrahl (3') in einer der ersten Bewegungsrichtung (V) entgegengesetzten zweiten Bewegungsrichtung (R) und sich das Ablenkelement (4) in einer der ersten Richtung entgegengesetzten zweiten Richtung bewegt,
- die Lage des abgelenkten Stimulationslichtstrahls (3') mit mindestens einem Sensorelement (10, 11) erfasst wird und die Antriebseinrichtung (5) Antriebsenergie in Form von Pulsen an das Ablenkelement (4) in Abhängigkeit von der erfassten Lage des abgelenkten Stimulationslichtstrahls (3') abgibt, wobei
- die Abgabe von Antriebsenergie an das Ablenkelement (4) ausgelöst wird, wenn sich der abgelenkte Stimulationslichtstrahl (3') in der zweiten Bewegungsrichtung (R) bewegt, und
- nur dann Antriebsenergie an das Ablenkelement (4) abgegeben wird, wenn sich der abgelenkte Stimulationslichtstrahl (3') in der zweiten Bewegungsrichtung (R) bewegt und sich das Ablenkelement (4) in der zweiten Richtung bewegt.

## Claims

1. Device for reading out X-ray information stored in a storage phosphor layer (1), comprising
- a light source (2) for generating a stimulating light beam (3), which is able to stimulate the storage phosphor layer (1) to have it emitting emission light,
- a deflection element (4) for deflecting the stimulating light beam (3) in such a way that the deflected stimulating light beam (3') is moved across the storage phosphor layer (1),
- a drive equipment (5) for driving the deflection element (4), said deflection element (4) comprising a reflecting area, which is made to move oscillatingly by the drive equipment (5), and
- a detector (7) for detecting emission light which is emitted by the storage phosphor layer (1) while the deflected stimulating light beam (3') moves in a first direction of movement (V) across the storage phosphor layer (1) and the deflection element (4) moves in a first direction,
**characterized in that**
the detector (7) is designed in such a way or the device is controlled in such a way that the detector (7) does not capture emission light when the deflected stimulating light beam (3') moves in a second direction of movement (R) which is opposite to the first direction of movement (V) and the deflection element (4) moves in a second direction which is opposite to the first direction,
at least one sensor element (10, 11) is provided for detecting the position of the deflected stimulating light beam (3') and
a control unit (15) is provided for controlling the drive equipment (5) in such a way that
- drive energy is pulse-wise released to the deflection element (4) as function of the detected position of the deflected stimulating light beam (3'), said release of drive energy to the deflection element (4) being triggered when the deflected stimulating light beam (3') moves in the second direction of movement (R), and
- the release of drive energy to the deflection element (4) only then takes place when the deflected stimulating light beam (3') moves in the second direction of movement (R) and the deflection element (4) moves in the second direction.

2. Device according to claim 1, wherein the drive equipment (5) is designed in such a way that the release of drive energy to the deflection element (4) is triggered, after a predefined time delay, by the deflected stimulating light beam (3') after sweeping over the at least one sensor element (11).

3. Device according to any one of the preceding claims, comprising at least one transducer for detecting the position of the deflection element (4).

4. Device according to any one of the preceding claims, wherein the deflection element (4) comprises a magnetic element (4') and the drive equipment (5) comprises an electromagnetic unit, which can interact with the magnetic element (4'), thereby releasing drive energy to the deflection element (4).

5. Device according to any one of the preceding claims, wherein the reflecting area of the deflection element (4) can be excited by the drive equipment (5) to move oscillatingly about an axis (17) which, preferably, runs parallel to the mirror area.

6. Device according to claim 5, wherein the reflecting area comprises a resonance frequency and the drive equipment (5) is configured in such a way for driving the reflecting area that the reflecting area oscillates in its resonance frequency.

7. Device according to any one of the preceding claims, wherein the deflection element (4) oscillates with a period (T) and the pulses have a pulse duration (Ta), which is shorter than the half period (T/2).

8. Device according to any one of the preceding claims, comprising a transport equipment which can curve the storage phosphor layer (1) at least during the read-out.

9. Method for reading out X-ray information stored in a storage phosphor layer (1), wherein
- a stimulating light beam (3), which is able to stimulate the storage phosphor layer (1) to have it emitting emission light, is deflected by a deflection element (4) and is thereby moved across the storage phosphor layer (1),
- the deflection element (4) comprises a reflecting area, which is made to move oscillatingly by a drive equipment (5), and
- emission light emitted by the storage phosphor layer (1) is captured while the deflected stimulating light beam (3') moves in a first direction of movement (V) across the storage phosphor layer (1) and the deflection element (4) moves in a first direction,
**characterized in that**
- no emission light is captured when the deflected stimulating light beam (3') moves in a second direction of movement (R) which is opposite to the first direction of movement (V) and the deflection element (4) moves in a second direction which is opposite to the first direction,
- the position of the deflected stimulating light beam (3') is detected by means of at least one sensor element (10, 11) and the drive equipment (5) pulse-wise releases drive energy to the deflection element (4) as function of the detected position of the deflected stimulating light beam (3'), wherein
- said release of drive energy to the deflection element (4) is triggered when the deflected stimulating light beam (3') moves in the second direction of movement (R), and
- the release of drive energy to the deflection element (4) only then takes place when the deflected stimulating light beam (3') moves in the second direction of movement (R) and the deflection element (4) moves in the second direction.

## Revendications

1. Dispositif de lecture d'informations radiographiques stockées dans une couche luminescente à mémoire (1), comprenant
- une source lumineuse (2) servant à générer un faisceau de lumière de stimulation (3) qui est capable de stimuler la couche luminescente à mémoire (1) afin de la faire émettre de la lumière d'émission,
- un élément déflecteur (4) servant à dévier le faisceau de lumière de stimulation (3) de façon à ce que le faisceau de lumière de stimulation dévié (3') se déplace en travers de la couche luminescente à mémoire (1),
- un équipement d'entraînement (5) servant à entrainer l'élément déflecteur (4), ledit élément déflecteur (4) comprenant une zone réfléchissante mise en mouvement oscillant par l'équipement d'entraînement (5), et
- un détecteur (7) servant à détecter de la lumière d'émission émise par la couche luminescente à mémoire (1) lorsque le faisceau de lumière de stimulation dévié (3') se déplace dans un premier sens de mouvement (V) en travers de la couche luminescente à mémoire (1) et que l'élément déflecteur (4) se déplace dans un premier sens,
**caractérisé en ce que**
ledit détecteur (7) est conçu ou ledit dispositif est contrôlé de façon à ce que le détecteur (7) ne détecte pas de lumière d'émission lorsque le faisceau de lumière de stimulation dévié (3') se déplace dans un deuxième sens de mouvement (R) opposé au premier sens de mouvement (V) et que l'élément déflecteur (4) se déplace dans un deuxième sens opposé au premier sens,
au moins un élément de détection (10, 11) est prévu pour détecter la position du faisceau de lumière de stimulation dévié (3') et une unité de contrôle (15) est prévue pour contrôler l'équipement d'entraînement (5) de façon à ce que
- de l'énergie d'entraînement soit transmise, sous forme d'impulsions, à l'élément déflecteur (4) en fonction de la position détectée du faisceau de lumière de stimulation dévié (3'), ladite transmission d'énergie d'entraînement à l'élément déflecteur (4) étant déclenchée lorsque le faisceau de lumière de stimulation dévié (3') se déplace dans le deuxième sens de mouvement (R), et
- ladite transmission d'énergie d'entraînement à l'élément déflecteur (4) ne soit déclenchée que lorsque le faisceau de lumière de stimulation dévié (3') se déplace dans le deuxième sens de mouvement (R) et que l'élément déflecteur (4) se déplace dans le deuxième sens.

2. Dispositif selon la revendication 1, **caractérisé en ce que** l'équipement d'entraînement (5) est conçu de façon à ce que la transmission d'énergie d'entraînement à l'élément déflecteur (4) soit déclenchée, à l'issue d'un délai d'attente prédéfini, par le faisceau de lumière de stimulation dévié (3') après son passage devant ledit au moins un élément de détection (11).

3. Dispositif selon l'une quelconque des revendications précédentes, comprenant au moins un capteur servant à détecter la position de l'élément déflecteur (4).

4. Dispositif selon l'une quelconque des revendications précédentes, **caractérisé en ce que** l'élément déflecteur (4) comprend un élément magnétique (4') et que l'équipement d'entraînement (5) comprend une unité électromagnétique pouvant interagir avec l'élément magnétique (4') afin de transmettre de l'énergie d'entraînement à l'élément déflecteur (4).

5. Dispositif selon l'une quelconque des revendications précédentes, **caractérisé en ce que** la zone réfléchissante de l'élément déflecteur (4) peut être stimulée par l'équipement d'entraînement (5) afin de la faire osciller autour d'un axe (17) qui s'étend, de préférence, parallèlement à la zone à miroirs.

6. Dispositif selon la revendication 5, **caractérisé en ce que** la zone réfléchissante a une fréquence de résonance et que l'équipement d'entraînement (5) est configuré de façon à ce qu'il entraîne la zone réfléchissante de façon à la faire osciller à sa fréquence de résonance.

7. Dispositif selon l'une quelconque des revendications précédentes, **caractérisé en ce que** l'élément déflecteur (4) oscille avec une période (T) et que les impulsions ont une durée d'impulsion (Ta) inférieure à la demi-période (T/2).

8. Dispositif selon l'une quelconque des revendications précédentes, comprenant un équipement de transport pouvant courber la couche luminescente à mémoire (1) au moins pendant la lecture.

9. Procédé de lecture d'informations radiographiques stockées dans une couche luminescente à mémoire (1), **caractérisé en ce que**
- un faisceau de lumière de stimulation (3) qui est capable de stimuler la couche luminescente à mémoire (1) afin de la faire émettre de la lumière d'émission, est dévié par un élément déflecteur (4) pour se déplacer en travers de la couche luminescente à mémoire (1),
- l'élément déflecteur (4) comprend une zone réfléchissante mise en mouvement oscillant par l'équipement d'entraînement (5), et
- la lumière d'émission émise par la couche luminescente à mémoire (1) est captée lorsque le faisceau de lumière de stimulation dévié (3') se déplace dans un premier sens de mouvement (V) en travers de la couche luminescente à mémoire (1) et que l'élément déflecteur (4) se déplace dans un premier sens, **caractérisé en ce que**
- aucune lumière d'émission n'est captée lorsque le faisceau de lumière de stimulation dévié (3') se déplace dans un deuxième sens de mouvement (R) opposé au premier sens de mouvement (V) et que l'élément déflecteur (4) se déplace dans un deuxième sens opposé au premier sens,
- la position du faisceau de lumière de stimulation dévié (3') est détectée par au moins un élément de détection (10, 11) et que l'équipement d'entraînement (5) transmet de l'énergie d'entraînement, sous forme d'impulsions, à l'élément déflecteur (4) en fonction de la position détectée du faisceau de lumière de stimulation dévié (3'), où
- ladite transmission d'énergie d'entraînement à l'élément déflecteur (4) est déclenchée lorsque le faisceau de lumière de stimulation dévié (3') se déplace dans le deuxième sens de mouvement (R), et
- ladite transmission d'énergie d'entraînement à l'élément déflecteur (4) ne soit déclenchée que lorsque le faisceau de lumière de stimulation dévié (3') se déplace dans le deuxième sens de mouvement (R) et que l'élément déflecteur (4) se déplace dans le deuxième sens.
